# EUROPEAN PATENT APPLICATION

(11) **EP 4 160 574 A1**
(43) Date of publication of application: **05.04.2023**
(21) Application number: 21813983.0
(22) Date of filing: 26.05.2021
(51) Int. Cl.: G09F 3/00, G06K 19/077

(54) **RFID LABEL AND METHOD FOR USING OF RFID LABEL**

(30) Priority: 28.05.2020 JP 2020093224; 24.05.2021 JP 2021086972
(71) Applicant: Sato Holdings Kabushiki Kaisha, Tokyo 108-0023 (JP)
(72) Inventor: NITTA, Haruhiko, Tokyo 108-0023 (JP)
(74) Representative: Grünecker Patent- und Rechtsanwälte PartG mbB
(86) International application number: PCT/JP2021/020085
(87) International publication number: WO 2021/241656

(57) **Abstract**

An RFID label includes an RFID inlay and has a waveform portion formed on at least a part of a peripheral edge.

## Description

### TECHNICAL FIELD

The present invention relates to an RFID label and a method of using the RFID label.

### BACKGROUND ART

In related art, a label that can be attached to a cylindrical body such as a blood collection tube or a test tube has been proposed (see JP H11-73109A). The label described in JP H11-73109A has perforations or through holes formed in label end portions in order to prevent the label end portions from floating without following a curved surface of the test tube.

### SUMMARY OF INVENTION

In recent years, in fields of manufacture, management, distribution, and the like of products, RFID media such as so-called RFID tags and RFID labels, which correspond to a radio frequency identification (RFID) technology for transmitting and receiving information by non-contact communication from an IC chip in which information related to products and identification information are written, have been widespread.

In a case of such an RFID label, an antenna pattern and a resin substrate for forming the antenna pattern are included, and thus the label is difficult to be bent as compared with a label not including an RFID inlay, and a label end portion is likely to float when the label is attached to a cylindrical body such as a test tube.

In addition, a blood collection tube, a test tube, or the like may be used in a severe environment such as an extremely low temperature, or a high temperature and high humidity. In this case, environmental followability of a label substrate exceeds an allowable range, and in a case where a label is to be attached to a non-flat portion, the label is particularly likely to be peeled off.

In such an application, it may be necessary to attach a label even in a state where, for example, water droplets or the like are adhered to a surface of an adherend such as a test tube. Therefore, the RFID label may be required to be attached to an adherend even under such severe conditions.

Therefore, an object of the present invention is to prevent an RFID label from floating from a surface of an adherend and to make the RFID label less likely to be peeled off.

According to an aspect of the present invention, there is provided an RFID label including an RFID inlay, in which a waveform portion is formed on at least a part of a peripheral edge.

According to the above aspect, since the waveform portion is formed on at least a part of the peripheral edge of the RFID label including the RFID inlay, it is easy to make an outer periphery of the RFID label follow a surface of an adherend. Therefore, it is possible to prevent the RFID label from floating from the surface of the adherend and to make the RFID label less likely to be peeled off.

### BRIEF DESCRIPTION OF DRAWINGS

[FIG. 1] FIG. 1 is a plan view of an RFID label continuous body according to an embodiment as viewed from a front surface side.
[FIG. 2] FIG. 2 is an enlarged plan view showing one of RFID inlays arranged on a separator of the RFID label continuous body shown in FIG. 1.
[FIG. 3] FIG. 3 is an enlarged view of a part of a non-parallel portion.
[FIG. 4] FIG. 4 is a cross-sectional view taken along a line IV-IV shown in FIG. 2.
[FIG. 5] FIG. 5 is a plan view of an RFID label according to a first modification as viewed from a front surface side.
[FIG. 6] FIG. 6 is a plan view of an RFID label according to a second modification as viewed from a front surface side.
[FIG. 7] FIG. 7 is a plan view of an RFID label according to a third modification as viewed from a front surface side.
[FIG. 8] FIG. 8 is a plan view of an RFID label according to a fourth modification as viewed from a front surface side.
[FIG. 9] FIG. 9 is a plan view of an RFID label according to a fifth modification as viewed from a front surface side.
[FIG. 10] FIG. 10 is a plan view of an RFID label according to a sixth modification as viewed from a front surface side.
[FIG. 11] FIG. 11 is a plan view of an RFID label according to a seventh modification as viewed from a front surface side.
[FIG. 12] FIG. 12 is a view showing a test tube to which an RFID label according to the present embodiment is to be attached, and a state in which the RFID label is attached to the test tube.
[FIG. 13] FIG. 13 is an external view of an Erlenmeyer flask as an adherend to which the RFID label shown in FIG. 11 is attached.
[FIG. 14] FIG. 14 is an external view of a bag body as an adherend to which the RFID label according to the present embodiment is attached.

### DESCRIPTION OF EMBODIMENTS

### [RFID label]

An RFID label 10 according to an embodiment of the present invention will be described.

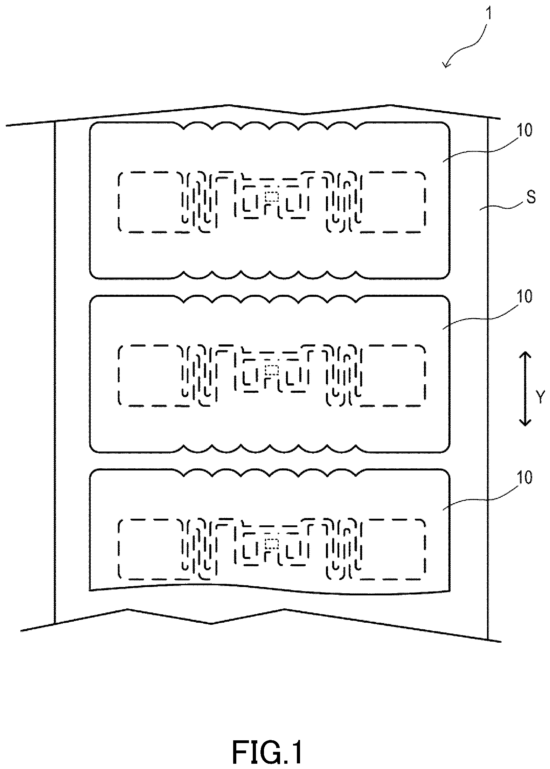

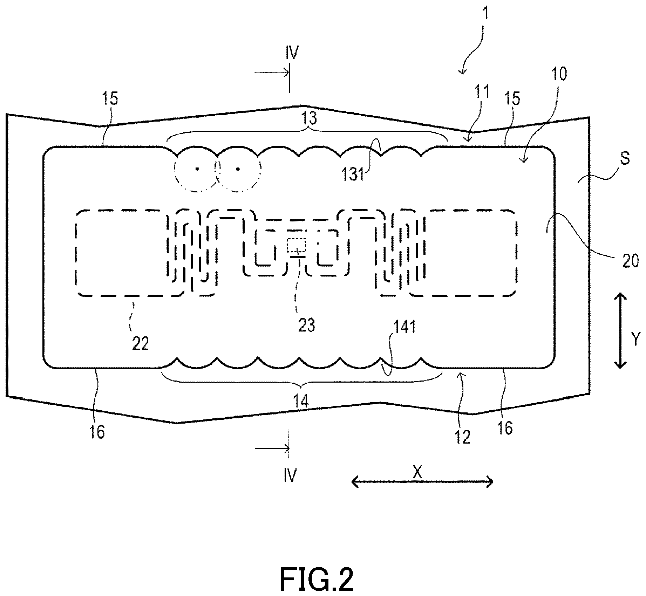

FIG. 1 is a plan view of an RFID label continuous body 1 according to the embodiment as viewed from a front surface side. FIG. 2 is an enlarged plan view showing one of RFID labels 10 arranged on a separator S of the RFID label continuous body 1 shown in FIG. 1.

As shown in FIG. 1, in the RFID label continuous body 1, a plurality of RFID labels 10 are arranged on the long belt-shaped separator S. The plurality of RFID labels 10 are arranged in a longitudinal direction (a Y direction shown in FIG. 1) of the separator S.

As shown in FIGS. 1 and 2, on peripheral edge portions 11 and 12 which face each other in the longitudinal direction (hereinafter, referred to as the Y direction) of the separator S, the RFID label 10 has non-parallel portions 13 and 14 which are non-parallel to a width direction (hereinafter, referred to as an X direction) of the separator S, and straight line portions 15 and 16, respectively.

The RFID label 10 according to the present embodiment has a rectangular shape, and the non-parallel portions 13 and 14 and the straight line portions 15 and 16 described above are formed on corresponding edges in the longitudinal direction of the RFID label 10, and edges in a lateral direction of the RFID label 10 are each formed by a straight line.

The non-parallel portions 13 and 14 forming a part of a contour (an outer periphery) of the RFID label 10 have concave portions 131 and 141 respectively that are recessed inward of the RFID label 10 with respect to the peripheral edge portions 11 and 12 on the same flat surface as the RFID label 10 formed in the rectangular shape. That is, the non-parallel portions 13 and 14 are waveform portions formed into a waveform.

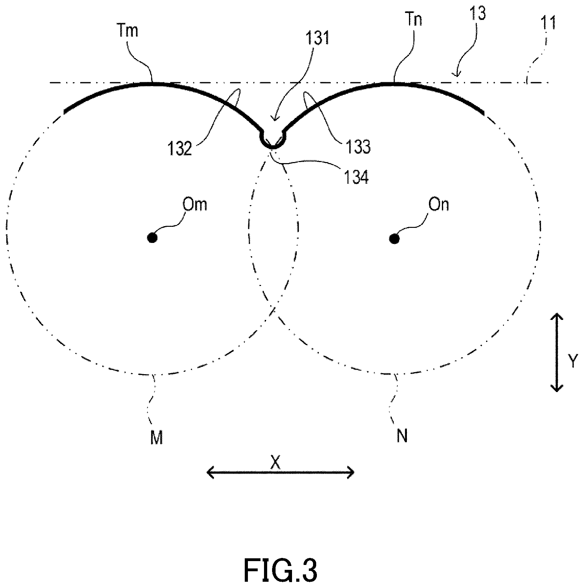

FIG. 3 is an enlarged view of a part of the non-parallel portion 13. In the present embodiment, as shown in FIGS. 2 and 3, the non-parallel portion 13 has a structure in which a plurality of concave portions 131 formed to be recessed inward of the RFID label 10 with respect to the peripheral edge portion 11 in the Y direction are continuous in the X direction.

Since the non-parallel portion 14 also has the same structure as the non-parallel portion 13 described above, the non-parallel portion 13 will be described below.

As shown in FIG. 3, in the present embodiment, a part of the concave portion 131 constituting the non-parallel portion 13 is formed by a curved line bulging outward of the RFID label 10 on the same flat surface (that is, the Y direction) as the RFID label 10.

In the present embodiment, the concave portion 131 has an arc 132 in which a vertex Tm of a perfect circle M centered on a point Om is formed outward of the RFID label 10, and an arc 133 in which a vertex Tn of a perfect circle N overlapping the circle M and centered on a point On is formed outward of the RFID label 10.

In the present embodiment, a curved portion 134 recessed inward of the RFID label 10 (that is, the Y direction) in an arc shape is formed at an intersection of the arc 132 and the arc 133 constituting the concave portion 131.

The curved portion 134 may be rephrased as, for example, a chain prevention portion that prevents a chain of peeling off of the arc 132 and the arc 133 arranged side by side.

That is, the non-parallel portion 13 forming a part of the contour (the outer periphery) of the RFID label 10 have the curved portion 134 (the chain prevention portion). When the non-parallel portion 13 has the arcs 132 and 133 protruding outward, the curved portion 134 is formed between the adjacent arcs 132 and 133.

For example, even if one of the continuous arcs 132 and 133 floats from an adherend, the curved portion 134 formed between the arc 132 and the arc 133 prevents the other arc from floating as the one arc floats. Therefore, it is possible to prevent the adjacent arcs 132 and 133 from floating in a chain manner. That is, the curved portion 134 functions as the chain prevention portion that prevents the chain of peeling off of the arc 132 and the arc 133.

In the present embodiment, the concave portion 131 constituting the non-parallel portion 13 preferably does not have the straight line portion and is preferably formed by superimposition of arc shapes from a viewpoint of removing water droplets. In the present embodiment, for example, diameters of the circles M, N,... are each 5 mm, and are designed so as to overlap each other by 1 mm.

The non-parallel portion 13 has a plurality of such concave portions 131 being continuous in the X direction. The same applies to the non-parallel portion 14.

In the present embodiment, the non-parallel portions 13 and 14 are provided, and thus it is easy to make the edges of the RFID label 10 follow a surface of the adherend. Therefore, it is possible to prevent the RFID label 10 from floating from the surface of the adherend and to make the RFID label 10 less likely to be peeled off.

In addition, the non-parallel portions 13 and 14 are provided, and thus even if water droplets or the like are present between the RFID label 10 and the surface of the adherend to which the RFID label 10 is attached, when the RFID label 10 is attached, the water droplets are discharged easily from between the RFID label 10 and the surface of the adherend toward the concave portions 131 and 141 as compared with a related-art label in which an edge of the label is formed by a straight line alone. Therefore, a good attachment state between the RFID label 10 and the adherend can be achieved.

The non-parallel portions 13 and 14 are preferably formed over the entire edge of the RFID label 10 from a viewpoint of an effect of discharging water droplets, but in a case where a printer having a configuration of reading a gap in front of and behind the RFID label 10 is used for printing on the RFID label 10, the peripheral edge portions 11 and 12 are preferably provided with the straight line portions 15 and 16, respectively.

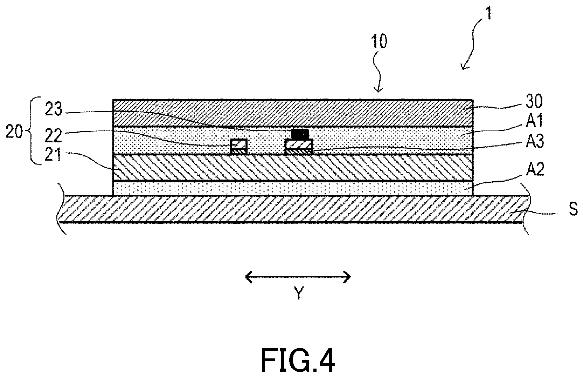

Next, a laminated structure of the RFID label 10 will be described. FIG. 4 is a cross-sectional view taken along a line IV-IV shown in FIG. 2.

As shown in FIG. 4, the RFID label 10 disposed on the separator S includes an RFID inlay 20 and a surface substrate 30 covering the RFID inlay 20.

The RFID inlay 20 includes a substrate 21, an antenna pattern 22 formed of a metal foil on the substrate 21, and an IC chip 23 connected to the antenna pattern 22.

As shown in FIG. 4, in the RFID label 10, a label substrate including the surface substrate 30 and a first adhesive layer A1 is laminated on a surface of the substrate 21 on a side where the IC chip 23 is mounted.

A surface of the substrate 21 opposite to the surface on the side where the IC chip 23 is mounted is temporarily attached to the separator S via a second adhesive layer A2. The RFID label 10 is peeled off from the separator S and attached to the adherend by the second adhesive layer A2.

As the substrate 21, for example, a single resin film such as polyvinyl chloride, polyethylene terephthalate, polypropylene, polyethylene, or polyethylene naphthalate, or a multilayer film obtained by laminating a plurality of these resin films may be used.

In the present embodiment, as the substrate 21, in addition to the above resin film substrate, a paper substrate such as high-quality paper, medium-quality paper, or coated paper formed using these paper may be used.

In the present embodiment, the substrate 21 may have a thickness of 10 pm to 200 pm.

In the present embodiment, as indicated by broken lines in FIGS. 1 and 2, the antenna pattern 22 constitutes a dipole antenna having a loop portion on which the IC chip 23 is mounted, a meander extending symmetrically from the loop portion, and a capacitor hat connected to an end portion of the meander. An extending direction of the antenna pattern 22 is the same as an extending direction of the non-parallel portions 13 and 14, that is, a continuous direction of the arc 132 and the arc 133.

In the present embodiment, for example, the antenna pattern 22 is designed to have an antenna length and an antenna line width corresponding to a UHF band (300 MHz to 3 GHz, particularly 860 MHz to 960 MHz).

As shown in FIG. 4, the antenna pattern 22 is bonded to the substrate 21 with, for example, an adhesive layer A3 made of an adhesive or a bonding agent of acrylic type, urethane type, silicone type, rubber type, or the like.

The antenna pattern 22 is formed of a metal foil. Examples of a metal applicable to the antenna pattern 22 include copper and aluminum. In the present embodiment, an aluminum foil is used from a viewpoint of reducing a manufacturing cost.

A thickness of the metal foil is preferably 3 pm or more and 50 pm or less from viewpoints of an entire thickness of the RFID inlay 20 or a thickness of the RFID label 10, the manufacturing cost, and the like. In the present embodiment, for example, an aluminum foil having a thickness of 20 pm is used.

The IC chip 23 is a semiconductor package designed to be able to communicate with a reader (not shown), which is a reading device of the IC chip 23, corresponding to the UHF band.

Although not shown in FIG. 4, the IC chip 23 is electrically and mechanically connected to a part of the loop portion of the antenna pattern 22 with an anisotropic conductive material such as an anisotropic conductive bonding agent or an anisotropic conductive film.

In the present embodiment, the RFID inlay 20 and the surface substrate 30 have the same planar shape. After the surface substrate 30 and the RFID inlay 20 are laminated, the non-parallel portions 13 and 14 can be formed by punching both the surface substrate 30 and the RFID inlay 20 using a cutter having the same shape as the non-parallel portions 13 and 14. On the other hand, for example, in the planar shape, the RFID inlay 20 laminated inside the surface substrate 30 may be smaller than the surface substrate 30. In this case, the non-parallel portions 13 and 14 may be formed on the surface substrate 30 alone.

### <Effects>

According to the RFID label continuous body 1 having the above configuration, in the RFID label 10, the non-parallel portions 13 and 14 which are non-parallel to the width direction (the X direction) of the separator S are formed respectively on the peripheral edge portions 11 and 12 which face each other in the longitudinal direction (the Y direction) of the separator S.

In a case of the RFID label 10, the metal foil is used for the antenna pattern 22 formed in the RFID inlay 20, and thus an end portion of the RFID label 10 is likely to float from the surface of the adherend in combination with a stress that causes the substrate 21 of the RFID inlay 20 to return to the flat surface. On the other hand, the non-parallel portions 13 and 14 are formed on the RFID label 10, and thus it is easy to make the non-parallel portions 13 and 14 follow the surface of the adherend. Therefore, it is possible to prevent the RFID label 10 from floating from the surface of the adherend and to make the RFID label 10 less likely to be peeled off.

According to the RFID label 10 in the present embodiment, even if water droplets are present between the RFID label 10 and the surface of the adherend, when the RFID label 10 is attached to the surface of the adherend, the water droplets present between the RFID label 10 and the surface of the adherend are discharged easily from the non-parallel portions 13 and 14 to the outside.

Therefore, even if the surface of the adherend is wet, the RFID label 10 can be attached without floating from the surface of the adherend as compared with an RFID label in which an edge of the label is formed in a straight line.

In the non-parallel portions 13 and 14, the concave portions 131 and 141 that are recessed inward of the RFID label 10 with respect to the peripheral edge portions 11 and 12 are formed respectively in a direction along the flat surface of the RFID label 10 formed in the rectangular shape.

The concave portions 131 and 141 are formed, and thus even if water droplets are present between the RFID label 10 and the surface of the adherend, when the RFID label 10 is attached to the surface of the adherend, the water droplets are pushed out from the concave portions 131 and 141, and are discharged easily from between the RFID label 10 and the surface of the adherend to the outside.

In the present embodiment, a part of the concave portion 131 constituting the non-parallel portion 13 has the arc 132 and the arc 133 bulging outward of the RFID label 10 on the same flat surface (the Y direction) as the RFID label 10.

As described above, arc portions are formed as the non-parallel portions 13 and 14 of the RFID label 10, and thus the water droplets between the RFID label 10 and the surface of the adherend can move radially toward the arc portions of the non-parallel portions 13 and 14 as compared with a related-art RFID label in which an edge is formed by a straight line alone, and therefore the water droplets are discharged easily from between the RFID label 10 and the surface of the adherend to the outside.

In the present embodiment, the curved portion 134 recessed inward of the RFID label 10 (the Y direction) is formed at the intersection of the arc 132 and the arc 133 constituting the concave portion 131. Accordingly, the water droplets discharged from the concave portions 131 and 141 are received by the curved portion 134, and thus in the concave portions 131 and 141, it is possible to prevent the water droplets discharged from between the RFID label 10 and the surface of the adherend to the outside from returning to between the RFID label 10 and the adherend.

When all peripheral edges of the RFID label 10 are formed as the non-parallel portions 13 and 14 having a waveform, the RFID label 10 is likely to be peeled off from the separator S. On the other hand, the straight line portions 15 and 16 are formed on the peripheral edge portions 11 and 12, respectively, and thus it is possible to prevent the RFID label 10 from being easily peeled off from the separator S.

According to the straight line portions 15 and 16, when the printing is performed on the RFID label 10 using the printer having the configuration of reading the gap of the RFID label 10, the gap can be accurately read as compared with a case where the gap of the RFID label 10 is detected in the non-parallel portions 13 and 14.

By printing in advance a so-called eye mark, which is used as a mark for printing the RFID label 10, on the straight line portion 15, it is possible to accurately perform alignment in the printer as compared with a case where the alignment for printing is performed based on an eye mark printed on the non-parallel portions 13 and 14.

According to the straight line portions 15 and 16, in a case of detecting whether the RFID label 10 is attached to the adherend in a correct position and a correct state after the RFID label 10 is attached to the adherend, it is also possible to accurately perform the detection as compared with a case where the detection is performed based on the non-parallel portions 13 and 14.

### <Modifications of RFID label>

Next, modifications of the RFID label disposed at the RFID label continuous body 1 according to the present embodiment will be described.

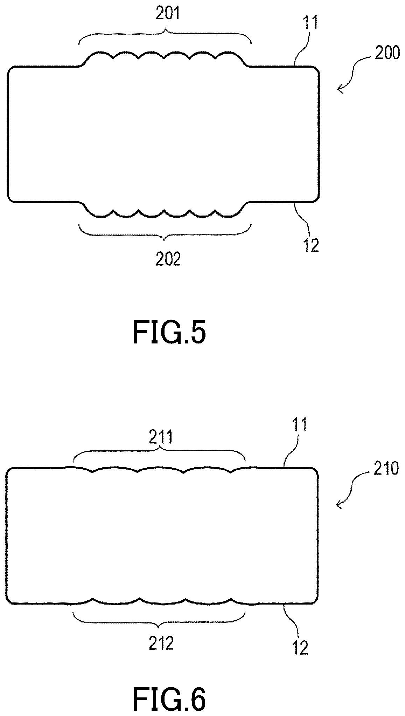

FIG. 5 is a plan view of an RFID label 200 according to a first modification as viewed from a front surface side. In the RFID label 200, non-parallel portions 201 and 202 formed respectively on the peripheral edge portions 11 and 12 are formed as convex portions protruding outward of the RFID label 10 with respect to the peripheral edge portions 11 and 12.

FIG. 6 is a plan view of an RFID label 210 according to a second modification as viewed from a front surface side. In the RFID label 210, non-parallel portions 211 and 212 formed respectively on the peripheral edge portions 11 and 12 are formed by a combination of elliptical arcs.

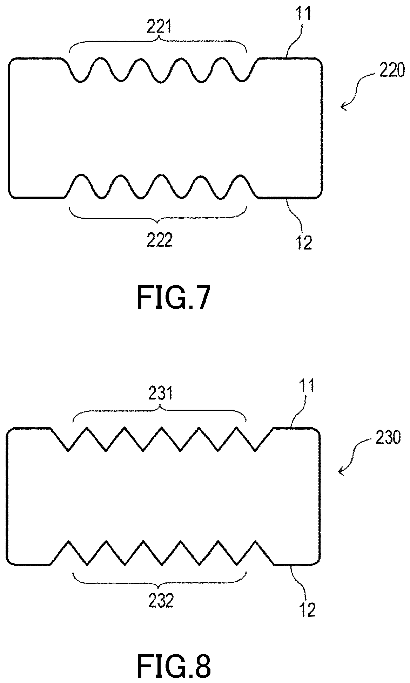

FIG. 7 is a plan view of an RFID label 220 according to a third modification as viewed from a front surface side. In the RFID label 220, sine wave-shaped non-parallel portions 221 and 222 are formed on the peripheral edge portions 11 and 12, respectively.

FIG. 8 is a plan view of an RFID label 230 according to a fourth modification as viewed from a front surface side. In the RFID label 230, triangular wave-shaped non-parallel portions 231 and 232 are formed on the peripheral edge portions 11 and 12, respectively.

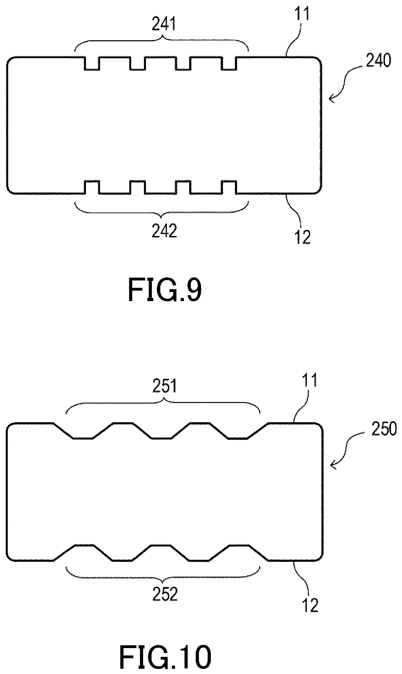

FIG. 9 is a plan view of an RFID label 240 according to a fifth modification as viewed from a front surface side. In the RFID label 240, rectangular wave-shaped non-parallel portions 241 and 242 are formed on the peripheral edge portions 11 and 12, respectively.

FIG. 10 is a plan view of an RFID label 250 according to a sixth modification as viewed from a front surface side. In the RFID label 250, trapezoidal wave-shaped non-parallel portions 251 and 252 are formed on the peripheral edge portions 11 and 12, respectively.

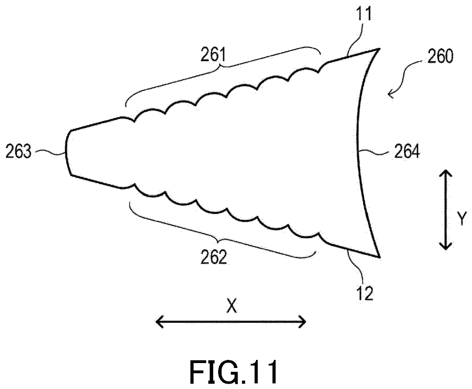

FIG. 11 is a plan view of an RFID label 260 according to a seventh modification as viewed from a front surface side. Non-parallel portions 261 and 262 are formed on the RFID label 260.

In the RFID label 260, the peripheral edge portion 11 and the non-parallel portion 261 form a predetermined angle in the X direction, and the peripheral edge portion 12 and the non-parallel portion 262, which face the peripheral edge portion 11 and the non-parallel portion 261, respectively, are formed to be line-symmetrical to the peripheral edge portion 11 and the non-parallel portion 261 with respect to an axis along the X direction.

Peripheral edge portions 263 and 264 facing each other in the X direction are each formed in a curved line being convex to a direction to which the peripheral edge portion 11 and the peripheral edge portion 12 facing each other taper off.

Similarly to the RFID label 10, the RFID label 200 to the RFID label 260 shown in FIGS. 5 to 11 described above respectively also follow the surface of the adherend easily, and thus can be made less likely to be peeled off from the surface of the adherend.

The water droplets between the RFID label and the surface of the adherend can be pushed out from between the RFID label and the surface of the adherend and discharged to the outside, and thus a good attachment state can be obtained.

### [Adherend]

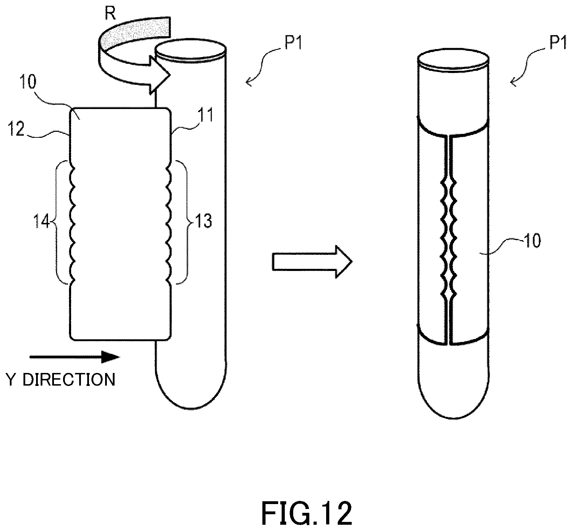

Next, an adherend according to an embodiment of the present invention will be described. FIG. 12 is a view showing a test tube P1 as an adherend to which the RFID label 10 according to the present embodiment is to be attached, and a state in which the RFID label 10 is attached to the test tube P1.

In the present embodiment, a case where the adherend is the test tube P1 will be described as an example in which the adherend is a cylindrical body or a tubular body having a curved surface to which the RFID label 10 is to be attached.

The related-art RFID label includes an RFID inlay, and thus is difficult to be bent as compared with a label not including an RFID inlay, and in a case where an attempt is made to attach the related-art RFID label to a cylindrical body such as the test tube P1 as in the present embodiment, there is a problem that a label end portion is likely to float.

Particularly, as a material of the test tube P1, for example, a material having high transparency and a second lowest surface tension after fluororesin, such as polymethylpentene, may be used. A test tube made of polymethylpentene has a characteristic that a label is difficult to be attached to the test tube.

In addition, the test tube P1 is used for blood collection or specimen testing, and thus is exposed to a wide temperature environment from an extremely low temperature to a high temperature, or a high humidity environment. In such an application, it may be necessary to attach a label even in a state where, for example, water droplets or the like are adhered to a surface of the test tube P1.

When the RFID label 10 is used at the test tube P1 having a curved surface, the following using method can be given as an example. The following method may be realized by an attachment device or the like.

First, while the RFID label continuous body 1 shown in FIG. 1 is conveyed in the Y direction, necessary information is printed on each of the RFID labels 10 by using the printer (not shown).

Next, the RFID label 10 having the waveform portions (the non-parallel portions 13 and 14) at the facing edges respectively is attached to the test tube P1 having the curved surface such that the waveform portions, that is, the non-parallel portion 13 and the non-parallel portion 14 face each other.

For example, the RFID label 10 is peeled off from the separator S, and as shown in FIG. 12, the peripheral edge portion 11 and the non-parallel portion 13 of the RFID label 10 are brought into contact with the surface of the test tube P1, the RFID label 10 is conveyed, and the RFID label 10 is wound and attached to the surface of the test tube P1 while rotating the test tube P1 in a rotation direction R at the same speed as a conveyance speed of the RFID label 10.

According to the RFID label 10 in the present embodiment, even in a case where water droplets or the like adhere to the surface of the test tube P1, when the non-parallel portion 13 is brought into contact with the surface of the test tube P1, the water droplets or the like are radially pushed away by the concave portion 131 included in the non-parallel portion 13, and thus the water droplets or the like are prevented from entering between the RFID label 10 and the surface of the test tube P1.

After the non-parallel portion 13 is brought into contact with the surface of the test tube P1, the test tube P1 is rotated in the rotation direction R at the same speed as the conveyance speed of the RFID label 10, and the RFID label 10 is attached to the test tube P1, and thus the water droplets adhered to the surface of the test tube P1 are sandwiched between the RFID label 10 and the surface of the test tube P1 and pushed out to a rear side in the rotation direction of the RFID label 10 (an upstream side in the conveyance direction).

The concave portion 141 is formed on the non-parallel portion 14, and thus the water droplets between the RFID label 10 and the surface of the adherend are discharged easily in a radial direction toward the arc shape of the concave portion 141.

Therefore, the water droplets pushed out between the RFID label 10 and the surface of the adherend are discharged from between the RFID label 10 and the surface of the adherend to the outside by the peripheral edge portion 12 and the non-parallel portion 14 positioned on the upstream side in the conveyance direction.

According to the RFID label 10 in the present embodiment, the discharge of the water droplets between the RFID label 10 and the test tube P1 is promoted, and thus a good attachment state can be obtained.

According to the RFID label 10 in the present embodiment, even in a case where the RFID label 10 is applied to the test tube P1 used under the severe environment as described above, the RFID label 10 is easily attached to the surface of the test tube P1 as described above, and the good attachment state can be obtained, so that the RFID label 10 can be prevented from floating from the surface of the test tube P1.

In this way, it is possible to obtain the test tube P1 to which the RFID label 10 is attached without floating up.

When the RFID label 10 is applied to a cylindrical adherend such as the test tube P1, the RFID label 10 according to the present embodiment may be printed with information for designating an attachment direction with respect to the test tube P1 such that the X direction of the RFID label 10 is attached along an axial direction of the test tube P1.

Next, another embodiment of the adherend will be described.

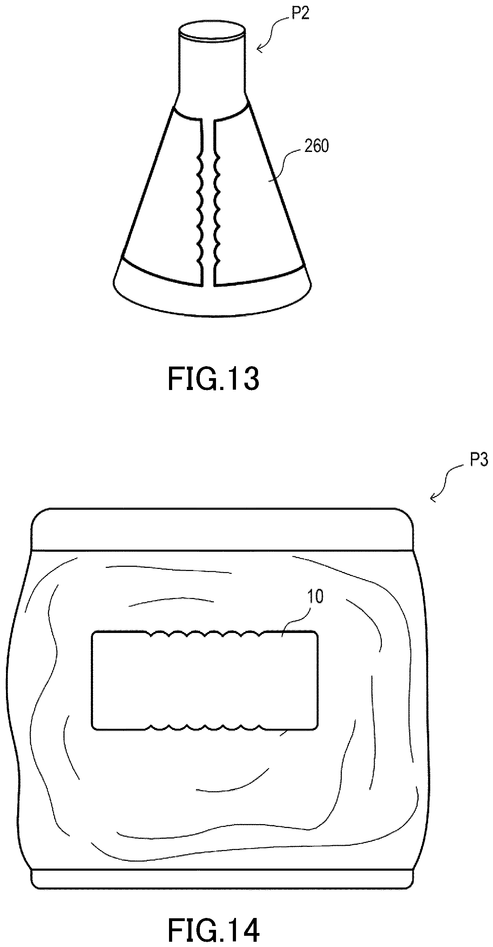

FIG. 13 is an external view of an Erlenmeyer flask P2 as an adherend to which the RFID label 260 shown in FIG. 11 is attached as a seventh modification.

As the RFID label 260, the peripheral edge portion 11 forms the predetermined angle in the X direction, the peripheral edge portion 12 facing the peripheral edge portion 11 is formed to be line-symmetrical to the peripheral edge portion 11 with respect to the axis along the X direction, and the peripheral edge portions 263 and 264 facing each other in the X direction are each formed in the curved line being convex to a direction to which the peripheral edge portion 11 and the peripheral edge portion 12 facing each other taper off, whereby it is also possible to make an RFID label less likely to be peeled off from an adherend having a tapered shape as the Erlenmeyer flask P2.

The adherend may be a bag body P3 in which a liquid or an irregular object is sealed.

FIG. 14 is an external view of a bag body P3 as an adherend to which the RFID label 10 according to the present embodiment is attached. In addition to the adherends shown in FIGS. 13 and 14, the adherend may be, for example, an adherend having a cubic curved surface such as a spherical body or a rugby ball, a box body, or the like.

For such a bag body P3, the RFID label 10 is also easily attached to a surface of the bag body P3, and a good attachment state can be obtained.

### [Other embodiments]

Although the embodiments of the present invention have been described above, the above embodiments are merely a part of application examples of the present invention, and are not intended to limit the technical scope of the present invention to the specific configuration of the above embodiments.

In the present embodiment, for the non-parallel portion 13, the diameters of the arcs forming the concave portion 131 and the overlapping length of the circles may be changed as appropriate.

In the present embodiment, for a set of elliptical shapes, the sine wave shape, the triangular wave shape, the rectangular wave shape, and the trapezoidal wave shape described with reference to FIGS. 5 to 10, a long axis and a short axis of an ellipse, an amplitude and a wavelength of a sine wave, an amplitude and a wavelength of a rectangular wave, or the like are not limited to dimensional ratios described in the drawings. Dimensional ratios of shapes constituting the non-parallel portions 13 and 14 may be changed as appropriate within a range in which the effects are exhibited.

In the present embodiment, the non-parallel portions 13 and 14 may have at least one curved line shape. As another example of the non-parallel portions 13 and 14, any one of the set of elliptical shapes, the sine wave shape, the triangular wave shape, the rectangular wave shape, or the trapezoidal wave shape described with reference to FIGS. 5 to 10, or a shape obtained by combining all of these may be used.

In the present embodiment, one of the non-parallel portions 13 and 14 may be formed alone.

In the present embodiment, a case where the antenna pattern 22 is a dipole antenna for a UHF band inlet has been described, but the antenna pattern 22 may be a coil antenna for an HF band.

The present application claims priorities under Japanese Patent Application No. 2020-093224 filed to Japan Patent Office on May 28, 2020 and Japanese Patent Application No. 2021-86972 filed to Japan Patent Office on May 24, 2021, and all the contents of these applications are incorporated herein by reference.

## Claims

1. An RFID label, comprising:
an RFID inlay, wherein
a waveform portion is formed on at least a part of a peripheral edge.

2. The RFID label according to claim 1, wherein
the waveform portion and a straight line portion are formed on the peripheral edge of the RFID label.

3. The RFID label according to claim 2, wherein
the RFID label has a rectangular shape,
the waveform portion and the straight line portion are formed at an edge in a longitudinal direction of the RFID label, and
an edge in a lateral direction of the RFID label is formed by a straight line.

4. The RFID label according to any one of claims 1 to 3, wherein
the RFID inlay has an antenna pattern extending in a predetermined direction, and
an extending direction of the waveform portion and an extending direction of the antenna pattern are the same.

5. The RFID label according to any one of claims 1 to 4, wherein
the waveform portion has at least one arc shape.

6. The RFID label according to claim 5, wherein
the waveform portion has a plurality of arc shapes bulging outward of the RFID label.

7. The RFID label according to claim 6, wherein
a chain prevention portion is formed as an arc recessed inward of the RFID label between the plurality of arc shapes formed to bulge outward of the RFID label.

8. A method of using an RFID label including an RFID inlay and having a waveform portion formed on at least a part of each of facing edges of the RFID label, the method comprising:
attaching the RFID label to an adherend having a curved surface such that the waveform portions face each other.
